Europäisches Patentamt

European Patent Office·

Office européen des brevets

(11) Publication number: **0 169 686**
**B1**

# EUROPEAN PATENT SPECIFICATION

(45) Date of publication of patent specification: **17.05.89**

(51) Int. Cl.⁴: **B 60 T 8/00**

(21) Application number: **85304929.4**

(22) Date of filing: **10.07.85**

(54) Improvements in hydraulic anti-skid systems for vehicles.

(30) Priority: **25.07.84 GB 8418950**

(43) Date of publication of application:
**29.01.86 Bulletin 86/05**

(45) Publication of the grant of the patent:
**17.05.89 Bulletin 89/20**

(84) Designated Contracting States:
**DE FR IT**

(56) References cited:
**US-A-4 229 049**
**US-A-4 421 362**

(73) Proprietor: **LUCAS INDUSTRIES public limited company**
**Great King Street**
**Birmingham, B19 2XF West Midlands (GB)**

(72) Inventor: **Farr, Glyn Phillip Reginald**
**21 The Hamlet**
**Leek Wootton Warwickshire (GB)**

(74) Representative: **Spall, Christopher John et al**
**BARKER, BRETTELL & DUNCAN 138 Hagley Road**
**Edgbaston Birmingham B16 9PW (GB)**

Courier Press, Leamington Spa, England.

EP 0 169 686 B1

## Description

This invention relates to hydraulic anti-skid braking systems for a vehicle of the four wheel type in which the behaviour of a braked wheel is sensed by skid sensing means and at a skid point is operative to actuate an anti-skid modulator for modulating the supply of brake-applying fluid to the brake of that wheel to prevent that wheel from locking.

The aim of hydraulic anti-skid systems of the kind set forth under a skid condition is to ensure that the vehicle can be steered and also that it has lateral or sideways stability.

In known anti-skid systems, for example forming the subject of GB 1 193 269, a modulator is fitted to each front wheel brake, and each modulator also modulates the supply of fluid to the brake on the digonally opposite rear wheel. If one modulator should fail, for example because of failure of its drive mechanism, one pair of diagonally opposed wheels can be braked fully to a skid point. On normal surfaces this provides a reasonably controlled stop because one of the front wheels is rotating, which allows the vehicle to be steered, and one of the rear wheels is also rotating to provide lateral or sideways stability. However, if the vehicle is on a split μ surface, that is to say where the wheels on opposite sides of the vehicle are running on surfaces of which the coefficients of friction (μ) are different, then the front wheel, of which the brake is controlled by the modulator will be running on a surface of a different μ from that over which the diagonally opposite wheel is running. If the front wheel provided with the modulator is on the good surface and its diagonally opposite rear is on a slippery surface, then three of the four wheels can lock, and the vehicle is liable to spin.

We are also aware of U.S. Patents Nos. 4421362 and 4229049 which disclose anti-skid braking systems for vehicles of the four-wheel type. Each anti-skid braking system comprises a single anti-skid modulator for modulating the supply of brake-applying fluid to the brakes on the rear wheels of a vehicle in response to a skid signal, and means for equalising the pressures applied to the brakes on the rear wheels under such conditions. In the systems disclosed in U.S. Patents Nos. 4421362 and 4229049 full brake-applying pressure, suitably from a master cylinder, is applied at all times directly to the brakes on both front wheels of the vehicle when the master cylinder is operated, and this pressure is not modulated by the anti-skid modulator when a skid signal is operative. Thus a situation can arise in which both front wheels can lock, which would prevent the vehicle from being steered.

According to our invention an hydraulic anti-skid system of the kind set forth for a vehicle of the four-wheel type incorporates only one skid sensing means and only one anti-skid modulator, and the skid sensing means and the modulator are both associated with one front wheel, the modulator also controlling the operation of brakes on both rear wheels of the vehicle.

When the vehicle is travelling on a normal surface it follows therefore that a reasonably controlled stop is achieved because one of the front wheels is rotating, which allows the vehicle to be steered, and both of the rear wheels are also rotating to provide lateral or sideways stability. Similarly, when the vehicle is braked on a split μ surface, one of the front wheels will be rotating to provide steering, and the rear wheel on the surface of higher μ will also be rotating to provide lateral or sideways stability.

When the system is of the 'X' split type with each front wheel brake interconnected to the brake on the diagonally opposite rear wheel, the rear wheel brakes are interconnected by a control valve which senses the pressure in the line downstream from the anti-skid modulator and is operative to isolate the brake on the front wheel not provided with the modulator from the brake on the diagonally opposite uncontrolled rear wheel and reduce the pressure applied to the brake in that uncontrolled rear wheel to that of the controlled rear.

When the system is of the 'HI' split type in which a portion, suitably one half, of the brakes on both front wheels are connected in a circuit with the brakes on both rear wheels, and the remaining portions of the two front brakes are connected in a second circuit, the single anti-skid modulator modulates the pressure in its associated front wheel half directly and half indirectly by means of the control valve, and the brakes on both rear wheels. This leaves the two halves of the other front wheel brake applied normally without anti-skid, as before.

Some anti-skid braking systems are illustrated in the accompanying drawings in which:—

Figure 1 is a layout of a known hydraulic anti-skid brake system of the 'X' split type;

Figure 2 shows the layout of Figure 1 in a different mode;

Figure 3 is a layout similar to Figure 1, but incorporating a single skid sensing means and a single modulator;

Figure 4 shows the layout of Figure 3 in a different mode;

Figure 5 is a layout of an hydraulic anti-skid system according to our invention;

Figure 6 shows the layout of Figure 5 in a different mode;

Figure 7 is a layout similar to Figures 5 and 6 but including a section through the rear control valve; and

Figure 8 is a layout of an hydraulic anti-skid braking system of the "HI" split type in accordance with our invention and incorporating the control valve of Figure 7.

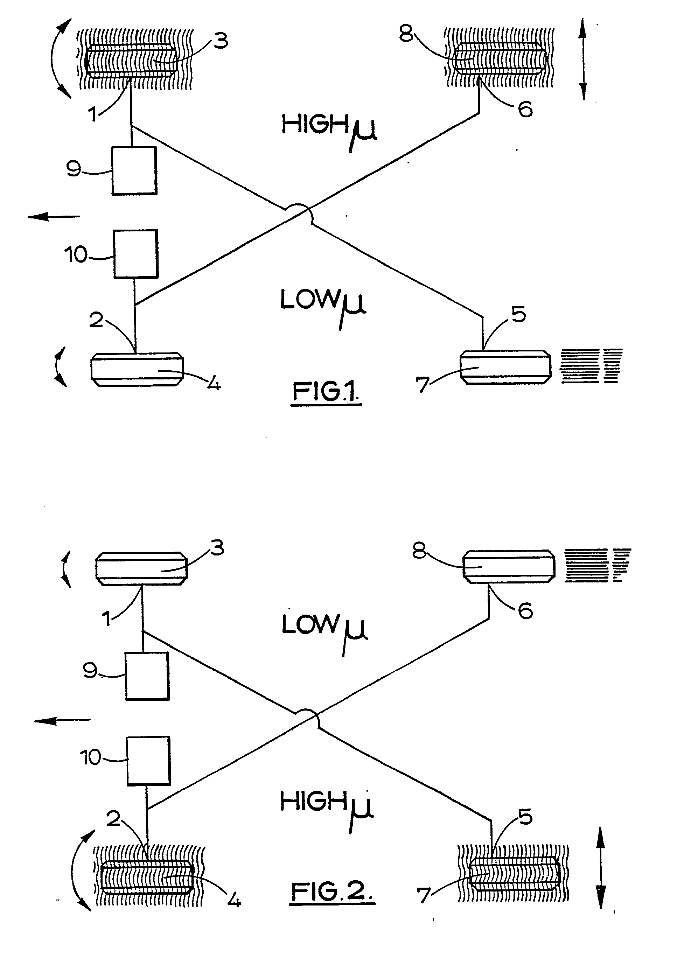

In the known system for a vehicle of the four-wheel type shown in the layout of Figures 1 and 2, a brake 1, 2 on each front wheel 3, 4 is interconnected to a brake 5, 6 on each diagonally opposite rear wheel 7, 8. Each front wheel 3, 4 is provided with a skid sensing and brake-pressure modulating unit 9, 10 which modulates the supply of pressure from a source of brake-applying fluid, suitably on hydraulic master cylinder (not shown) to the brake on a respective front wheel and on its diagonally opposite respective rear wheel in accordance with the behaviour of the said front wheel.

As shown in Figure 1, when the brakes are applied with the vehicle travelling over a split μ surface with the wheels 3 and 8 travelling over the portion having a higher μ and the wheels 4 and 7 travelling over the portion having a lower μ, the unit 10 is operable to reduce the pressure applied to the brakes 2 and 6. The wheels 4 and 8 will continue to rotate, as will the front wheel 3 which is braked on the portion of higher μ and in any case can be controlled by the unit 9, but the rear wheel 7 will skid. This means that both front wheels 3 and 4 can steer, and the controlled rear wheel brake 6 is applied to give lateral or sideways stability to the vehicle.

Similarly, as shown in Figure 2, when the portions of higher and lower μ are reversed, the unit 9 operates, and again both front wheels 3 and 4 rotate and steer, as can the rear wheel 7, but the rear wheel 8 will skid.

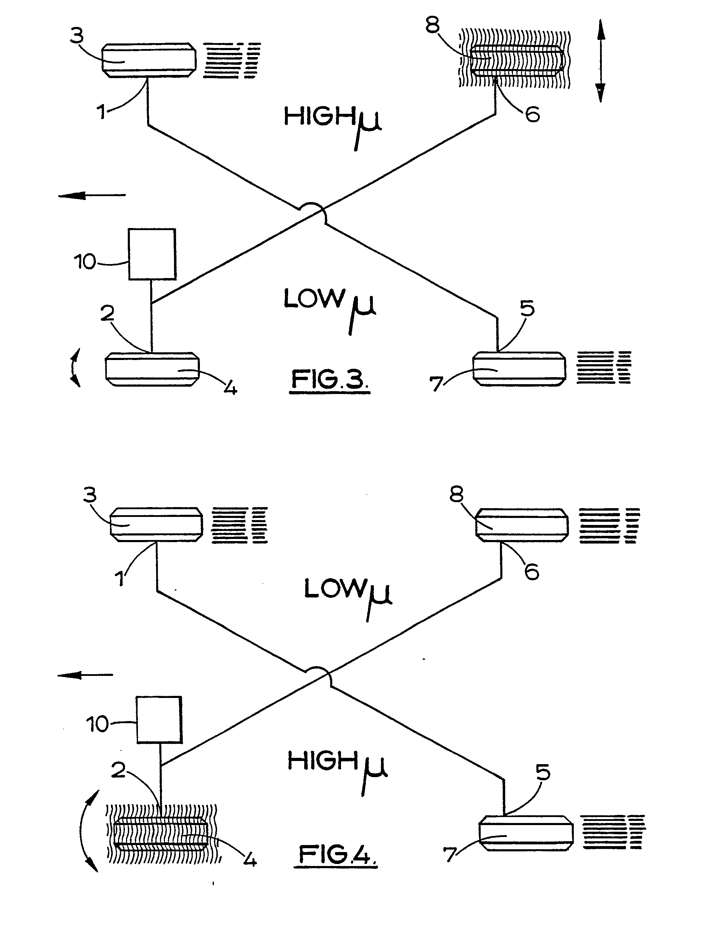

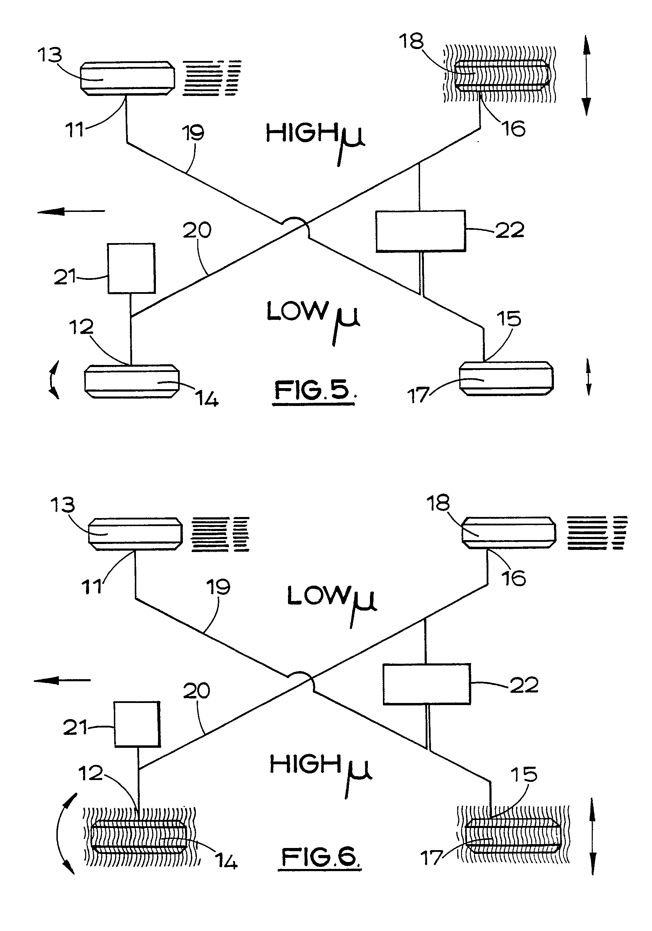

Figures 3 and 4 show the effect of omitting the sensing and modulating unit 9 from the layout of Figures 1 and 2.

When the brakes in the system of Figures 3 and 4 are applied with the vehicle travelling over a split μ surface and with the wheels 3 and 8 on the portion of higher μ and the wheels 4 and 7 on the portion of lower μ, then the effect is similar to that described above with reference to Figure 1. In other words, the wheels 4 and 8 will rotate, but the wheels 3 and 7 will lock. However the wheel 4 rotating, on low μ, provides some steering control and the wheel 8, on high μ, provides good lateral stability.

If the vehicle passes onto a surface where the modulated front wheel 4 is on high μ, see Figure 4, then the wheel 4 will rotate but the wheel 8, on low μ, will lock. Also the wheels 3 and 7 will lock, since there is no anti-skid control on the diagonal which interconnects the brakes 1 and 5. In this case, with the three wheels 3, 7 and 8 locked, the vehicle lacks lateral or sideways stability and the rear end of the vehicle will probably swing round.

This disadvantage can be avoided if both rear wheels are controlled from the single modulating unit 10 for the front wheel 4.

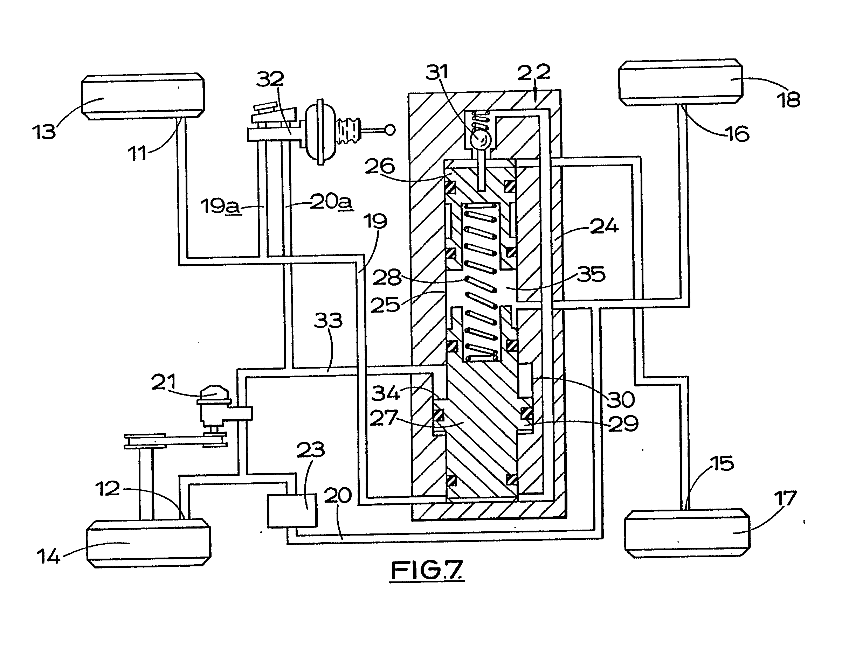

An hydraulic anti-skid braking system in accordance with this invention and in the form of an X-split, is illustrated schematically in the layout of Figures 5 and 6, and in more detail in Figure 7. As illustrated a brake 11, 12 on each front wheel 13, 14 is interconnected with a brake 15, 16 on each diagonally opposite rear wheel 17, 18 through brake lines 19, 20. The front wheel 14 is provided with a skid sensing and brake-pressure modulating unit 21, which comprises the sole modulating unit incorporated in the system. The unit 21 may be of any convenient construction. The brake lines 19 and 20 are interconnected on the downstream side of the unit 21 through a control valve 22, and an apportioning valve 23 is located in the line 20 between the modulating unit 21 and the brake 16 in the diagonally opposite rear wheel 18.

The control valve 22, see Figure 7, comprises a housing 24 having a longitudinally extending bore 25 which is closed at both ends and in which works a pair of oppositely acting expander and safety pistons 26 and 27 respectively which are urged away from each other and towards the closed ends of the bore 25 by means of a compression spring 28. The piston 26 is of substantially constant diameter throughout its axial length, but the piston 27 includes a portion 29 of increased diameter which works in an intermediate portion 30 of the bore, also of similarly increased diameter.

A one-way valve 31 is operated by the piston 26 to control communication between the brakes 11 and 15 through the line 19, with the fluid in the line 19 acting on the end of the piston 27 which is remote from the spring 28.

The brakes 11 and 15, and the brakes 12 and 16, are supplied with fluid under pressure from different pressure spaces of a tandem master cylinder 32, through lines 19a and 20a respectively, with the line 20a leading to the modulating unit 21. A branch line 33 from the line 20a is connected into the housing 24 so that fluid from that pressure space acts on a shoulder 34 at the step in diameter of the piston 27 to urge the piston 27 into engagement with the adjacent closed end of the bore 25. In addition a space 35 in the bore 25 between the pistons 26 and 27 is connected into the line 20 on the downstream side of the apportioning valve 23 so that, normally, the valve 31 is held in an open position to provide unrestricted communication between the brakes 11 and 15 through the brake-line 19.

When the master cylinder is operated to apply the brakes normally fluid is supplied to the brakes 12 and 11 directly, simultaneously to the brake 16 through the apportioning valve 23, and to the brake 15 through the one-way valve 31 which is held open by pressure from the line 20 which is present in the space 35 to hold the piston 26 against the adjacent closed end of the bore 25.

If the braked wheel 14 starts to lock the modulator unit 21 is operative to isolate the line 20a from the front brake 12 and the line 20, and reduce the pressure applied to the front brake 12 and the pressure in line 20 applied to the rear brake 16. Since the pressure in the space 35 is also reduced, due to the pressure acting on the outer end of the piston 26, the piston 26 is displaced away from the adjacent closed end of the bore 25. Initial movement of the piston 26 in this direction permits the valve 31 to close, which isolates the rear brake 15 from the front brake 11, and subsequent movement of the piston 26 in this direction reduces the pressure applied to the brake 15 by expanding the effective volume of the portion of the line 19, between the valve 22 and the brake 15. When the wheel 14 recovers, the unit 21 re-applies pressure to the brakes 12 and 16, and the pressure applied to the brake 15 is also increased by the increased pressure in the space 35 displacing the piston 26 towards the adjacent closed end of the bore 25.

Thus on a normal surface the driver, by pressing too hard on the pedal of the master cylinder 32, can only lock the wheel 13. The three remaining wheels will rotate to enable the vehicle to be steered and to provide it with lateral stability.

When the vehicle is travelling over a split μ surface and the brakes are applied with the wheels 13 and 18 travelling over the portion of higher μ as illustrated in Figure 5 then, as described above, the brakes 12, 16 and 15 are released due oo the operation of the unit 21 which senses the behaviour of the front wheel 14 travelling over the portion of lower μ. The wheels 14, 18 and 17 will rotate to provide steering and lateral or sideways stability.

When the wheels 13 and 18 are travelling over the portion of lower μ as illustrated in Figure 6, and the modulated front wheel 14 is on high μ then if the brakes are applied hard enough potentially to lock the front wheel 14, the modulating unit 21 will operate to reduce the brake torque on the wheels 14 and 18 directly and, on the wheel 17 indirectly via the control valve 22. However, as the wheel 18 is on low μ it will lock, but the wheel 17, on high μ, will rotate and provide lateral stability. Since front wheel 14 can be steered, the vehicle can be steered and has lateral stability.

In the event of failure of the line 20a, the pressure in the line 19 urges the piston 27 upwardly to co-operate with the piston 26 and hold the valve 31 in an open position. This ensures that the brake 15 can be applied in addition to the brake 11 on the diagonally opposite front wheel 13.

Should the line 19a fail, then the brakes 12 and 16 can be applied normally, with anti-lock control if the brakes are applied too hard.

In the system of Figures 5 to 7 only a single apportioning valve 23 is incorporated since this is situated upstream of the valve 22. When situated upstream a reduction in the pressure in the line 20 will automatically cause a reduction in the pressure line 19 to the brake 15 with operation of the control valve 22. Thus both rear wheel brakes 15 and 16, even though they are supplied with fluid from two separate master cylinder lines 19a, 20a, can be apportioned with a single valve. Two such valves would be required if they were situated downstream of the control valve 22, with one apportioning valve disposed in each line 19, 20, respectively.

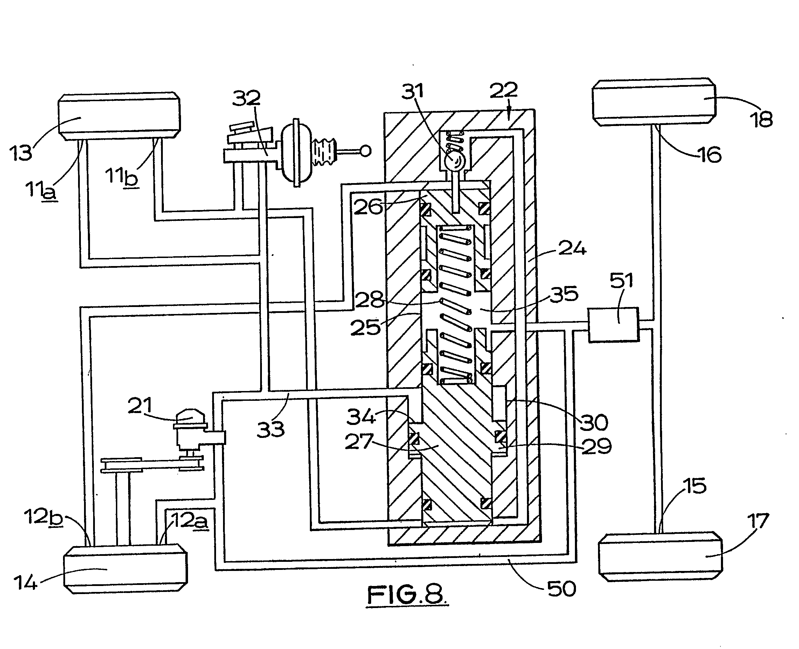

The hydraulic anti-skid braking system illustrated in Figure 8 of the drawings, is of "HI"-split type. Half 11a, 12a of the brakes on the front wheels 13 and 14 are connected in first circuit with the master cylinder 32 and with the brakes 15, 16 on the rear wheels 17 and 18, and the remaining halves 11b and 12b of the brakes on the front wheels 13 and 14 are connected in a second circuit with the master cylinder 32.

The control valve 22 is connected into both circuits.

The branch line 33 connects the master cylinder 32 and the brake halves 11a and 12a into the housing 24 so that the pressure acts on the shoulder 34, and a line 50 to the brakes 15 and 16 on both rear wheels 17 and 18 is connected into the space 35 with an apportioning valve 51 being disposed between the brakes 15 and 16 and the connection between the line 50 and the space 35. The brake halves 11b and 12b are interconnected through the one-way valve 31 with the pressure in that circuit acting on the outer end of the piston 27 in opposition to the force of the pressure acting over the shoulder 34.

When the master cylinder 32 is operated to apply the brakes normally, fluid is supplied to the brake halves 11a, 11b, and 12a directly, to the brakes 15 and 16 through the apportioning valve 51, and to the brake half 12b through the one-way valve 31 which is held open by the pressure in the space 35 holding the piston 26 against the adjacent closed end of the bore 25.

If the braked wheel 14 starts to lock, the modulator unit 21 is operative to reduce the pressure applied to the brake halves 11a and 12a, and the pressure applied to both brakes 15 and 16 on the rear wheels 17 and 18 through the apportioning valve 51. Since the pressure in the space 35 is also reduced, the pressure from the master cylinder 32 acting on the outer end of the piston 26 urges that piston inwardly, initially to permit the one-way valve 31 to close thereby isolating the brake half 12b from the brake half 11b, and subsequently reducing the pressure applied to the brake half 12b by expanding the effective volume of the connection between the valve 22 and the brake half 12b.

Thus, as in the embodiment of Figures 5 to 7, on a normal surface only the wheel 13 can be locked. The three remaining wheels will rotate to enable the vehicle to be steered, and to provide it with lateral stability.

When the vehicle is travelling over a split μ surface and the brakes are applied with the wheels 13 and 18 travelling over the portion of higher μ, then as described above the brake halves 12a and 12b, and the brakes 15 and 16 are released due to operation of the unit 21 which senses the behaviour of the front wheel 14 travelling over the portion of lower μ.

When the wheels 13 and 18 are travelling over portions of lower μ, the wheels 13 and 18 will skid but since the pressure applied to the brake 15 on the rear wheel 17 is controlled by the modulating unit 21, the wheel 17 will continue to rotate. Since the wheel 14 can be steered, the vehicle can be steered and has lateral or sideways stability.

The construction and operation of the braking system of Figure 8 is otherwise the same as that of Figure 5 to 7, and corresponding reference numerals have been applied to corresponding parts.

## Claims

1. An hydraulic anti-skid braking system for a vehicle of the four wheel type in which the behaviour of a braked wheel (14) is sensed by skid sensing means and at a skid point is operative to actuate an anti-skid modulator (21) for modulating the supply of brake-applying fluid to the brake of that wheel to prevent that wheel from locking, characterised in that only one skid sensing means and only one anti-skid modulator (21), is incorporated and the skid sensing means and the modulator (21) are both associated with one front wheel (14), the modulator also controlling the operation of brakes (15, 16) on both rear wheels (17, 18) of the vehicle.

2. A system according to Claim 1, characterised in that the system is of the 'X' split type with each front wheel brake (11, 12) interconnected to the brake (15, 16) on the diagonally opposite rear wheel (17, 18), and the rear wheel brakes are interconnected by a control valve (22) which senses the pressure in the line downstream from the anti-skid modulator (21) and is operative to isolate the brake on the uncontrolled front wheel (13) not provided with the modulator from the brake on the diagonally opposite rear wheel (17) and reduce the pressure applied to the brake on that uncontrolled rear wheel to that of the controlled rear (18).

3. A system according to Claim 2, characterised in that apportioning valve (23) is disposed in a line between the modulator (21) and the brake (16) on the diagonally opposite rear wheel (18).

4. A system according to Claim 2 or Claim 3, characterised in that the control valve (22) comprises a housing (24) having a bore (25) in which works an expander piston (26) normally biassed by a spring (28) into an advanced position to hold in an open position a one-way valve (31) controlling communication between uncontrolled brakes (11, 15) on the diagonally opposite front and rear wheels (13, 17) opposite ends of the piston being exposed to the pressures applied to the brake (12) on the controlled front wheel (14) and the uncontrolled rear wheel (17) normally to hold the piston in an advanced position in which the one-way valve is open, a reduction in pressure applied to the brake on the controlled front wheel in response to a skid signal permitting the piston to move away from the advanced position initially causing the one-way valve to close and isolate the brake on the uncontrolled rear wheel from the brake on the uncontrolled front wheel and subsequently reducing the pressure applied to the said uncontrolled rear wheel to that applied to the brake on the controlled rear wheel.

5. A system according to Claim 4, characterised each front wheel brake (11, 12) is operated by a different supply (32) of brake-applying pressure, and a safety piston (27) also works in the bore (25) in the housing (24), the spring (28) acting between opposite ends to the two pistons, and the safety piston being exposed over its inner end to the pressure applied to the brake (16) on the controlled rear wheel (18), over its outer end to the pressure applied to the brake on the uncontrolled front wheel, and over the area of a radial shoulder (29) of increased diameter to the supply of brake-applying pressure which is applied to the brake (12) on the controlled front wheel (14), failure of the said supply reducing the force on the piston due to pressure acting on the radial shoulder whereafter the pressure from the other supply urges the safety piston in direction to co-operate with the expander piston and hold the one-way valve in its open position.

6. A system according to Claim 1, characterised in that the system is of the 'HI' split type in which a portion (11a, 12a) of the brakes on both front wheels (13, 14) are connected in a circuit with the brakes (15, 16) on both rear wheels (17, 18) and the remaining portions (11b, 12b) of the two front brakes are connected in a second circuit, and the single anti-skid modulator (21) modulates the pressure in its associated front wheel portion (12a) directly and the remaining portion (12b) indirectly by means of the control valve (22), and the brakes (15, 16) on both rear wheels (17, 18).

7. A system according to Claim 4, characterised in that each (11a, 11b, 12a, 12b) portion of each front brake comprises one half the brake on each respective wheel.

8. A system according to Claim 4 or Claim 5, characterised in that an apportioning valve (51) is disposed in a line between the modulator (21) and the brakes (15, 16) on both rear wheels (17, 18) of the vehicle.

9. A system according to any of Claims 6—8, characterised in that the control valve (22) comprises a housing (24) having a bore (25) in which works an expander piston (26) normally biassed by a spring (28) into an advanced position to hold in an open position a one-way valve (31) controlling communication between one of the portions (11a, 11b) of the brake on the uncontrolled front wheel (13), and the uncontrolled portion (12b) of the brake on the controlled front wheel (14), opposite ends of the piston being exposed to pressure supplied to the said one portion of the brake on the uncontrolled front wheel (13), and the pressure applied to the controlled portion (12a) of the brake on the controlled front wheel (14), which is also applied to the brake on both rear wheels (17, 18), a reduction in the pressure applied to the controlled portion of the brake on the controlled front wheel in response to a skid signal permitting the expander piston to move away from its advanced position initially causing the one-way valve to close to isolate the portion of the brake on the uncontrolled front wheel from the uncontrolled portion of the brake in the controlled front wheel, and subsequently reducing the pressure applied to the said uncontrolled portion of the brake on the controlled front wheel to that of the controlled portion of the brake on that controlled front wheel.

10. A system according to Claim 9, characterised in that there are first and second supplies of brake applying pressure (32), one for each circuit, and a safety piston (27) also works in the bore (25) in the housing (24), the spring (28) acting between adjacent ends of both pistons, and the safety piston between being exposed over its inner end to the pressure applied to the controlled portion (12a) of the brake on the controlled front wheel (14) from the first supply of brake-applying pressure, over its outer end to the pressure applied from the second supply of brake-applying fluid to a corresponding portion (11a, 11b) of the brake on the uncontrolled front wheel (13), and over the area of a radial shoulder (29) of increased diameter to the said first supply of brake-applying pressure, failure of the said first supply reducing the force in the safety piston due to pressure acting on the radial shoulder whereafter the pressure from the second supply urges the safety piston in a direction to co-operate with the expander piston and hold the one-way in its open position.

**Patentansprüche**

1. Hydraulisches Antiblockiersystem für ein Fahrzeug der Vierradbauweise, bei welchem das Verhalten eines gebremsten Rades (14) durch eine Blockierermittlungseinrichtung gemessen und bei einem Blockierpunkt in Betrieb genommen wird, um einen Antiblockiermodulator (21) zu betätigen, um die Zufuhr von Bremsbetätigungsfluid zu der Bremse dieses Rades zu verändern, um eine Blockierung des Rades zu verhindern, dadurch gekennzeichnet, daß nur eine Blockierermittlungseinrichtung und nur ein Antiblockiermodulator (21) vorgesehen sind und die Blockierermittlungseinrichtung und der Modulator (21) beide einem Vorderrad (14) zugeordnet sind, wobei der Modulator auch die Betätigung der Bremsen (15, 16) an beiden Hinterrädern (17, 18) des Fahrzeuges steuert.

2. System nach Anspruch 1, dadurch gekennzeichnet, daß das System gemäß der X-förmig aufgeteilten Bauart ausgebildet ist, bei welcher jede Vorderradbremse (11, 12) mit der Bremse (15, 16) des diagonal gegenüberliegenden Hinterrades (17, 18) verbunden ist und daß die Hinterradbremsen durch ein Steuerventil (22) verbunden sind, welches den Druck in der Leitung stromab das Antiblockiermodulators (21) mißt und betätigt werden kann, um die Leitung an dem ungesteuerten Vorderrad (13), welches nicht mit dem Modulator versehen ist, von der Bremse des diagonal gegenüberliegenden Hinterrades (17) zu trennen und um den Druck, welcher auf die Bremse dieses ungesteuerten Hinterrades aufgebracht wird, auf den Druck des gesteuerten Hinterrades (18) zu reduzieren.

3. System nach Anspruch 2, dadurch gekennzeichnet, daß ein Zumeßventil (23) in einer Verbindungsleitung zwischen dem Modulator (21) und der Bremse (16) des diagonal gegenüberliegenden Hinterrades (18) vorgesehen ist.

4. System nach Anspruch 2 oder 3, dadurch gekennzeichnet, daß das Steuerventil (22) ein Gehäuse (24) mit einer Bohrung (25) umfaßt, in welcher ein Expandierkolben (26) arbeitet, welcher normalerweise mittels einer Feder (28) in eine vorgeschobene Position vorgespannt ist, um ein Einwegeventil (31) in einer offenen Stellung zu halten, um eine Verbindung zwischen ungesteuerten Bremsen (11, 15) der diagonal gegenüberliegenden Vorder- und Hinterräder (13, 17) zu steuern, wobei gegenüberliegende Enden des Kolbens den Drücken ausgesetzt sind, welche auf die Bremse (12) des gesteuerten Vorderrades (14) und das ungesteuerte Hinterrad (17) aufgebracht werden, um den Kolben normalerweise in einer vorgeschobenen Stellung zu halten, in welcher das Einwegeventil geöffnet ist, wobei eine Reduktion des Druckes, welcher auf die Bremse des gesteuerten Vorderrades in Abhängigkeit von einem Blockiersignal aufgebracht wird, eine Bewegung des Kolbens weg von der vorgeschobenen Stellung gestattet, welche anfänglich ein Schließen des Einwegeventils bewirkt, sowie eine Trennung des ungesteuerten Hinterrades von der Bremse des ungesteuerten Vorderrades, und eine nachfolgende Reduzierung des Druckes, welcher auf das ungesteuerte Hinterrad aufgebracht ist, auf den Druck, welcher der Bremse des gesteuerten Hinterrades auferlegt ist.

5. System nach Anspruch 4, dadurch gekennzeichnet, daß jede Vorderradbremse (11, 12) mittels einer unterschiedlichen Zufuhr (32) von Bremsbetätigungsdruck betätigbar ist und daß ein Sicherheitskolben (27) ebenfalls in der Bohrung (25) des Gehäuses (24) wirkt, wobei die Feder (28) zwischen gegenüberliegenden Enden der beiden Kolben wirkt und wobei der Sicherheitskolben an seinem inneren Ende dem Druck ausgesetzt ist, welcher auf die Bremse (16) des gesteuerten Hinterrades (18) aufgebracht wird, sowie an seinem äußeren Ende mit dem Druck belegt wird, welcher der Bremse des ungesteuerten Vorderrades auferlegt wird, und weiterhin an einem Bereich einer radialen Schulter (29) größeren Durchmessers der Zufuhr von Bremsbetätigungsdruck ausgesetzt ist, welcher der Bremse (12) des gesteuerten Vorderrades (14) zugeführt wird, wobei ein Fehler dieser Zufuhr die Kraft auf den Kolben wegen des Druckes, welcher auf die radiale Schulter wirkt, reduziert, woraufhin der Druck von der anderen Druckzufuhr den Sicherheitskolben in eine Richtung drückt, um mit dem Expandierkolben zusammenzuwirken und das Einwegeventil in seiner offenen Stellung zu halten.

6. System nach Anspruch 1, dadurch gekennzeichnet, daß das System in der HI-getrennten Bauweise ausgeführt ist, in welcher ein Bereich (11a, 12a) der Bremsen an beiden Vorderrädern (13, 14) in einer Schaltung mit den Bremsen (15, 16) an beiden Hinterrädern (17, 18) verbunden sind und die verbleibenden Bereiche (11b, 12b) der beiden Vorderbremsen in einer zweiten Schaltung verbunden sind, und wobei der einzige Blockiermodulator (21) den Druck in dem ihm zugeordneten Vorderradbereich (12a) direkt moduliert und der verbleibende Bereich (12b) indirekt mittels des Steuerventils (22) moduliert wird, sowie die Bremsen der beiden Hinterräder (17, 18).

7. System nach Anspruch 4, dadurch gekennzeichnet, daß jeder Bereich (11a, 11b, 12a, 12b) jeder Vorderbremse jeweils die halbe Bremse an dem jeweiligen Rad umfaßt.

8. System nach Anspruch 4 oder 5, dadurch gekennzeichnet, daß ein Zumeßventil (51) in einer Leitung zwischen dem Modulator (21) und den Bremsen (15, 16) an beiden Hinterrädern (17, 18) des Fahrzeuges angeordnet ist.

9. System nach einem der Ansprüche 6 bis 8, dadurch gekennzeichnet, daß das Steuerventil (22) ein Gehäuse (24) mit einer Bohrung (25) umfaßt, in welcher ein Expandierkolben (26) arbeitet, welcher üblicherweise mittels einer Feder (28) in eine vordere Position vorgespannt ist, um ein Einwegeventil (31) in einer offenen Stellung zu halten, welches eine Verbindung zwischen einem der Bereiche (11a, 11b) der Bremse an dem ungesteuerten Vorderrad (13) steuert, sowie den ungesteuerten Bereich (12b) der Bremse des gesteuerten Vorderrades (14), wobei gegenüberliegende Enden des Kolbens einem Druck ausgesetzt sind, welcher dem einen Bereich der Bremse des ungesteuerten Vorderrades (13) zugeführt wird, sowie dem Druck, welcher dem gesteuerten Bereich (12a) der Bremse des gesteuerten Vorderrades (14) zugeführt wird, welcher auch der Bremse an beiden Hinterrädern (17, 18) zugeführt wird, wobei eine Reduzierung des dem gesteuerten Bereich der Bremse des gesteuerten Vorderrades zugeführten Druckes in Abhängigkeit von einem Blockiersignal eine Bewegung des Expandierkolbens von der vorderen Position ermöglich, welche anfänglich ein Schließen des Einwegeventils bewirkt, um den Bereich der Bremse an dem ungesteuerten Vorderrad von dem ungesteuerten Bereich der Bremse des gesteuerten Vorderrades zu trennen, und um nachfolgend den Druck, welcher dem ungesteuerten Bereich der Bremse des gesteuerten Vorderrades zugeführt wird, auf den Druck zu reduzieren, welcher an dem gesteuerten Bereich der Bremse des gesteuerten Vorderrades vorliegt.

10. System nach Anspruch 9, dadurch gekennzeichnet, daß eine erste und eine zweite Zufuhr von Bremsbetätigungsdruck (32), eine für jede Schaltung, vorgesehen sind, sowie ein Sicherheitskolben (27), welcher in der Bohrung (25) in dem Gehäuse wirkt, wobei die Feder (28) zwischen gegenüberliegenden Enden der beiden Kolben wirkt, wobei der Sicherheitskolben dazwischen an seinem inneren Ende dem Druck ausgesetzt ist, welcher auf den gesteuerten Bereich (12a) der Bremse des gesteuerten Vorderrades (14) von der ersten Bremsbetätigungsdruck-Zufuhr augebracht wird, und an seinem anderen Ende dem Druck ausgesetzt ist, welcher von der zweiten Bremsbetätigungs-Fluidzufuhr auf einen zugehörigen Bereich (11a, 11b) der Bremse des ungesteuerten Vorderrades (13) aufgebracht wird, sowie im Bereich einer radialen Schulter (29) größeren Durchmessers dem Druck der ersten Bremsbetätigungszufuhr ausgesetzt ist, wobei ein Fehler der ersten Druckzufuhr die Kraft auf den Sicherheitskolben wegen des Druckes, welcher auf die radiale Schulter wirkt, reduziert, woraufhin der Druck von der zweiten Zufuhr den Sicherheitskolben in eine Richtung drückt, damit dieser mit dem Expandierkolben zusammenwirkt und das Einwegeventil in seiner offenen Stellung hält.

## Revendications

1. Un système de freinage hydraulique anti-blocage pour un véhicule du type à quatre roues dans lequel le comportement d'une roue freinée (14) est détecté par des moyens détecteurs de blocage et à un point de blocage fonctionne pour actionner un modulateur (21) anti-blocage pour moduler la fourniture de fluide applicateur de frein au frein de cette roue pour empêcher cette roue de se bloquer, caractérisé en ce qu'un seul moyen détecteur de blocage et un seul modulateur (21) anti-blocage sont incorporés et le moyen détecteur de blocage et le modulateur (21) sont tous les deux associés avec une roue avant (14), le modulateur commandant aussi le fonctionnement des freins (15, 16) sur les deux roues arrière (17, 18) du véhicule.

2. Un système selon la revendication 1, caractérisé en ce que le système est du type réparti en "X", chaque frein (11, 12) de roue avant étant relié au frein (15, 16) de la roue arrière (17, 18) diagonalement opposée, et en ce que les freins de roues arrière sont reliés entre eux par une valve (22) de commande qui détecte la pression dans la conduite en aval du modulateur (21) anti-blocage qui fonctionne pour isoler le frein de la roue avant (13) non commandée où ne se trouve pas le modulateur du frein de la roue arrière (17) diagonalement opposée et pour réduire la pression appliquée au frein de cette roue arrière non commandée à celle de la roue arrière commandée (18).

3. Un système selon la revendication 2, caractérisé en ce que la valve (23) de dosage est disposée dans une conduite entre le modulateur (21) et le frein (16) sur la roue arrière (18) diagonalement opposée.

4. Un système selon la revendication 2 ou la revendication 3, caractérisé en ce que la valve (22) de commande comprend un boîtier (24) qui présente un alésage (25) dans lequel se déplace un piston (26) d'expansion normalement sollicité par un ressort (28) dans une position avancée pour maintenir dans une position ouverte une valve monodirectionnelle (31) commandant la communication entre des freins (11, 15) non commandés sur les roues avant et arrière (13, 17) diagonalement opposées des extrémités opposées du piston étant exposées aux pressions appliquées au frein (12) sur la roue avant commandée (14) et la roue arrière non commandée (17) normalement pour maintenir le piston dans une position avancée dans laquelle est ouverte la valve monodirectionnelle, une réduction de pression appliquée au frein sur la roue avant commandée en réponse à un signal de blocage permettant au piston de s'écarter de la position avancée amenant initialement la valve monodirectionnelle à se fermer et à isoler le frein sur la roue arrière non commandée du frein sur la roue avant non commandée et réduisant ensuite la pression appliquée à ladite roue arrière non commandée à celle appliquée au frein sur la roue arrière commandée.

5. Un système selon la revendication 4 caractérisé en ce que chaque frein (11, 12) de roue avant est mis en oeuvre par une alimentation différente (32) de pression d'application de frein, et en ce qu'un piston de sécurité (27) se déplace aussi dans l'alésage (25) dans le boîtier (24), le ressort (28) agissant entre des extrémités opposées sur les deux pistons, et le piston de sécurité étant exposé sur son extrémité intérieure à la pression appliquée au frein (16) sur la roue arrière (18) commandée, sur son extrémité extérieure à la pression appliquée au frein sur la roue avant non commandée, et sur la surface d'un épaulement radial (29) de diamètre accru à l'alimentation de pression d'application de frein qui est appliquée au frein (12) sur la roue avant commandée (14), la défaillance de ladite alimentation réduisant la force sur le piston à cause de la pression agissant sur l'épaulement radial à la suite de quoi la pression provenant de l'autre alimentation sollicite le piston de sécurité en direction pour coopérer avec le piston d'expansion et maintenir la valve une voie dans sa position ouverte.

6. Un système selon la revendication 1 caractérisé en ce que le système est du type réparti en "HI" dans lequel une partie (11a, 12a) des freins sur les deux roues avant (13, 14) est reliée dans un circuit avec les freins (15, 16) sur les deux roues arrière (17, 18) et les parties restantes (11b, 12b) des deux freins avant sont reliées dans un second circuit, et le modulateur unique anti-blocage (21) module la pression dans sa partie de roue avant associée (12a) directement et la partie restante (12b) indirectement au moyen de la valve (22) de commande, et les freins (15, 16) sur les deux roues arrière (17, 18).

7. Un système selon la revendication 4 caractérisé en ce que chaque partie (11a, 11b, 12a, 12b) de chaque frein avant comprend une moitié du frein sur chaque roue respective.

8. Un système selon la revendication 4 ou la revendication 5, caractérisé en ce qu'une valve (51) de dosage est disposée sur une conduite entre le modulateur (21) et les freins (15, 16) sur les deux roues arrière (17, 18) du véhicule.

9. Un système selon l'une quelconque des revendications 6 à 8 caractérisé en ce que le valve (22) de commande comprend un boîtier (24) possédant un alésage (25) dans lequel se déplace un piston (26) d'expansion normalement sollicité par un ressort (28) dans une position avancée pour maintenir dans une position ouverte une valve monodirectionnelle (31) commandant la communication entre l'une des parties (11a, 11b) du frein sur la roue avant non commandée (13), et la partie (12b) non commandée du frein sur la roue avant (14) commandée, des extrémités opposées du piston étant exposées à la pression fournie à ladite partie du frein sur la roue avant (13) non commandée, et la pression appliquée à la partie (12a) commandée du frein sur la roue avant commandée (14), qui est aussi appliquée au frein sur les deux roues arrière (17, 18), une réduction de la pression appliquée à la partie commandée du frein sur la roue avant commandée en réponse à un signal de blocage permettant au piston d'expansion de s'écarter de sa position avancée initialement en amenant la valve monodirectionnelle à fermer pour isoler la partie du frein sur la roue avant non commandée de la partie non commandée du frein dans la roue avant commandée, et en réduisant ensuite la pression appliquée à ladite partie non commandée du frein de la roue avant commandée à celle de la partie commandée du frein sur cette roue avant commandée.

10. Un système selon la revendication 9, caractérisé en ce qu'il existe une première et une seconde alimentation de pression (32) d'application de frein, une pour chaque circuit, et en ce qu'un piston de sécurité (27) se déplace également dans l'alésage (25) dans le boîtier (24), le ressort (28) agissant entre des extrémités adjacentes des deux pistons, et le piston de sécurité étant exposé sur son extrémité intérieure à la pression appliquée à la partie commandée (12a) du frein sur la roue avant commandée (14) à partir de la première alimentation de pression d'application de frein, sur son extrémité extérieure à la pression appliquée à partir de la seconde alimentation de fluide d'application de frein à une partie correspondante (11a, 11b) du frein sur la roue avant (13) non commandée, et sur la surface d'un épaulement radial (29) de diamètre accru à ladite première alimentation de pression d'application de frein, la défaillance de ladite première alimentation réduisant la force dans le piston de sécurité en raison d'une pression agissant sur l'épaulement radial à la suite de quoi la pression provenant de la seconde alimentation sollicite le piston de sécurité dans une direction pour coopérer avec le piston à expansion et pour maintenir la valve monodirectionnelle dans sa position ouverte.

HIGH μ

LOW μ

FIG.1.

LOW μ

HIGH μ

FIG.2.

HIGH$\mu$

LOW$\mu$

FIG.3.

LOW$\mu$

HIGH$\mu$

FIG.4.

13
18
11
19
HIGH μ
16
21
20
22
LOW μ
12
14
15
17
**FIG.5.**

13
18
11
19
LOW μ
16
21
20
22
HIGH μ
12
14
15
17
**FIG.6.**

FIG.7

FIG.8.